# EUROPEAN PATENT APPLICATION

(11) **EP 3 846 408 A1**
(43) Date of publication of application: **07.07.2021**
(21) Application number: 20214347.5
(22) Date of filing: 15.12.2020
(51) Int. Cl.: H04L 29/06, H04M 3/51, H04M 3/56, H04M 11/04

(54) **ESTABLISHING AN AUDIO/VIDEO LINK TO A CENTRAL MONITORING STATION**

(30) Priority: 03.01.2020 US 202062956668 P
(71) Applicant: Carrier Corporation, Palm Beach Gardens, FL 33418 (US)
(72) Inventor: OLDS, Scott, Costa Mesa, CA 92626 (US); BRISCOE, Cooper, Costa Mesa, CA 92626 (US); CONNOR, Stephen, Costa Mesa, CA 92626 (US); DAHER, Gabriel, Rosebery New South Wales 2018 (AU)
(74) Representative: Dehns

(57) **Abstract**

Provided herein is an alarm system 100 including one or more sensors 150C configured to detect an alarm condition, and one or more client stations 150A. The alarm system 100 also includes a controller 115 of a security panel 202 operably coupled to the one or more client stations, and a central station operably coupled to the control panel over a network, wherein the central station is configured to initiate a conference between the one or more client stations and the central station. Also provided is a method to establish an audio/video link to a central monitoring station.

## Description

The present invention relates to security systems and more specifically to establishing an audio/video link to a central monitoring station of an alarm system.

In today's environment, single point two-way voice communication between the alarm systems and central monitoring stations are used to help reduce security systems false alarms. The false alarms may result in nuisance calls to the police or other authorities that may lead to non-response or fines for homeowners and business owners. Some alarm systems include self-contained security panels having a microphone and speakers integrated into the panel which can be used to communicate with the central monitoring stations. Because the microphones and cameras are fixed to the panels, the communication may be limited to within a proximity of the security panel and have a reduced a range of communications.

In a first aspect, the present invention provides an alarm system. The alarm system includes one or more sensors configured to detect an alarm condition; one or more client stations; a controller of a security panel operably coupled to the one or more client stations; and a central station operably coupled to the control panel over a network, wherein the central station is configured to initiate a conference between the one or more client stations and the central station.

Optionally, further embodiments include one or more client stations that each include a client station speaker, a client station microphone, and a client station controller, wherein the one or more client stations is used to confirm an alarm event.

Optionally, further embodiments include a controller that includes a display, a station speaker, a microphone, and is configured for communication.

Optionally, further embodiments include a conference coordinator that is configured to generate the conference link and provide a conferencing service.

Optionally, further embodiments include a conference coordinator that is integrated into the controller.

Optionally, further embodiments include a network that is a TCP/IP network.

Optionally, further embodiments include a central station that is configured to maintain an internal group list and an external group list for the conference.

Optionally, further embodiments include a central station that is configured to execute and host the conference using the internal group list and the external group list.

In a second aspect, the present invention provides a method for establishing an audio/video link to a central monitoring station. The method includes detecting, by one or more sensors and client stations at a location, an alarm event; transmitting, from a security alarm controller, a message including the alarm event and a link to a central station; executing, at the central station, the link to initiate a conference between the central station and one or more client stations; establishing the conference between the central station and the one or more client stations to validate the alarm event; and dispatching resources to the location based at least in part on the validation of the alarm event.

Optionally, further embodiments include responsive to the detection, generating, at a central conference coordinator, the link for the conference to validate the alarm event.

Optionally, further embodiments include the security alarm controller communicating with the central conference coordinator to generate the link for the conference.

Optionally, further embodiments include using a message that includes an identifier of the one or more sensors detecting the alarm event.

Optionally, further embodiments include a message that includes a video data of the one or more sensors that detected the alarm event.

Optionally, further embodiments include maintaining an internal group list of one or more sensors positioned at the location and an external group list of one or more authorized users to contact using the conference during an alarm event.

Optionally, further embodiments include a central station that is configured as the host to establish the conference.

Optionally, further embodiments include communicating with a user through the one or more client stations in the conference to validate the alarm event.

Optionally, further embodiments include responsive to validating the alarm event, dispatching resources to the location indicating the alarm event.

Optionally, further embodiments include a central station operator that communicates with the security alarm controller, the one or more client stations, and the one or more authorized users simultaneously.

Optionally, further embodiments include wirelessly communicating with the one or more sensors and the one or more client stations.

Optionally, further embodiments include a security alarm controller, the one or more sensors, and the one or more client stations that communicate over an internal network.

Technical effects of embodiments of the present invention provide a multipoint-to-multipoint approach to initiate a conference to validate the alarm condition to reduce the number of false alarms.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The following descriptions should not be considered limiting in any way. With reference to the accompanying drawings, like elements are numbered alike:
FIG. 1 depicts a system used for establishing an audio/video conference with a central monitoring station;
FIG. 2 depicts an example of an internal network including client stations, sensors, and a security panel that is configured to communicate with the central monitoring station; and
FIG. 3 depicts a flowchart of a method for establishing an audio/video conference with the central monitoring station.

Many residences and commercial properties are equipped with security alarm systems that are monitored by a central monitoring station. Various types of security systems exist. One type includes self-contained security panels that include a controller, a microphone, and a speaker to communicate with the central monitoring station.

In a hybrid type of security system, the security panel is configured to communicate with both hardwired and wireless sensors. Often times, the controller of a hybrid type of alarm system can be located in a location that is remote from the security panel and sensors.

It has been reported that false alarms are greater than 95% of all alarms that are reported to the central monitoring station. False alarms can lead to wasted resources that are dispatched to the location and can become a nuisance. Two-way communication can be used to verify the actual alarm or disarm the existing alarm. For example, a common technique to reduce the percentage of false alarms uses voice verification between a valid key holder and the central station operator through the security panel. The users can either confirm the alarm condition or clear the alarm so that no subsequent action is taken. The existing techniques are limited in a number of ways to including audio-only, PSTN and single-point connections.

The effective range of the security panel for communication is limited. The central station operator communicates with the user to determine the validity of the alarm event and will be able to clear any false alarms accordingly. Because the control panels are in a fixed position, the users may not be in proximity to the control panel to clear the alarm event.

In the hybrid arrangement, multiple client stations can be in communication with the alarm system controller and anyone one of the multiple points throughout the installation area can be used to confirm the validity of an alarm. This arrangement can extend the range of the system.

The techniques described herein establish a 2-way voice call that can be simultaneously routed to multiple locations in the installation area and/or other authorized users. This increases the chances of establishing a reliable communication with the user to verify the alarm. This allows 3^{rd} parties or other authorized users to be bridged into the conference. This architecture allows for real-time, same-time concurrent, communication with the central station. Existing solutions simply use a linear contact list. That is, the existing solutions individually and sequentially dial each user in the contact list and are not simultaneous. The techniques described herein provide the ability for a plurality of device/contacts to be contacted simultaneous and increases the efficiency in validating the alarm condition.

A detailed description of one or more examples of the disclosed apparatus and method are presented herein by way of exemplification and not limitation with reference to the Figures.

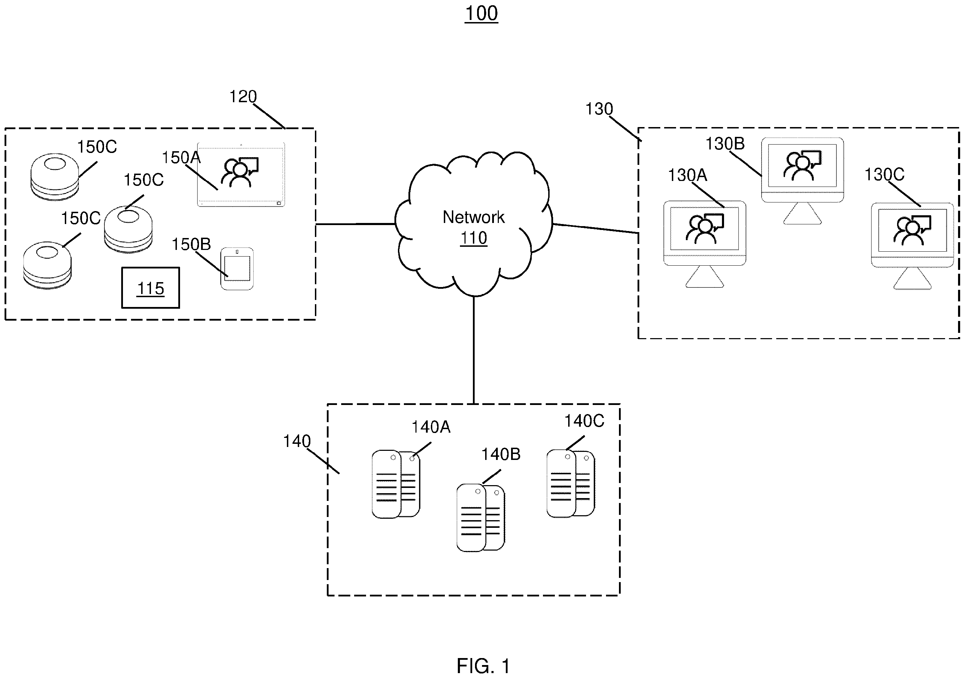

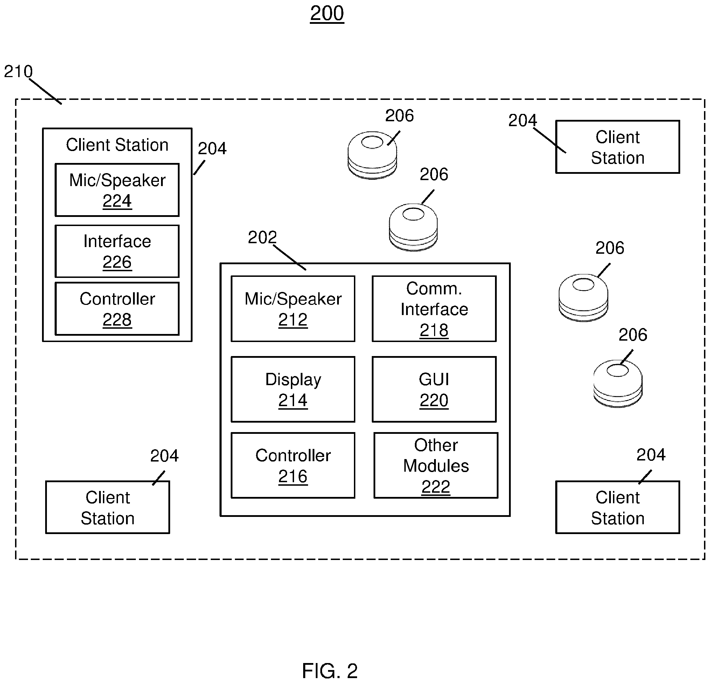

Turning to FIG. 1, the disclosed examples provide a security system (system) 100 that enables wireless communicating two-way (bidirectional) voice, by a network 110, which may be a short range network such as a local area network (such as WiFi) or a personal area network (such as Bluetooth). The system 100 may include a security alarm controller 115. The security alarm controller 115 can be included in a security control panel. A plurality of devices 150A, 150B, and 150C are provided in FIG. 1. The devices can include sensors, client stations, and other user devices. Such client stations 150A are provided throughout an installation area forming an internal network 120. Each of the client stations 150A includes within one of a plurality of client station housings, one of a plurality of client station microphones/speakers 224, wired/wireless interface 226, and one of a plurality of client station controllers 228 as shown with reference to FIG. 2.

The system 100 provides communications (bidirectional) between the internal network 120 and a central station 130, via a central station controller (not shown), that is remotely located over a further network which may be a long-range network such as a wide area network distributed over the Public Switched Telephone Networks (PTSN). The client stations 150A may be distributed throughout an installation area. The installation area may be a private residence having different zones that may be separate rooms and/or on multiple levels therein.

Large and powerful speakers and microphones for the client station microphones/speakers may be utilized. This configuration may provide a larger communication range at the client stations 150A. In some examples the client stations 150A may include video displays and may also be capable of video capture.

The system 100 provides an enhanced communication range. The client stations 150 are configured to annunciate programmable status messages, such as "front door open", throughout the installation area. The status messages provide an understanding of a state of the security system to a system user, who may be a homeowner.

The techniques described herein allow users that may not be within the range of a control panel but that are within the range of an audio device that is coupled to the control to validate the detected alarm event. This reduces the chance that the central station operator dispatches resources to the location because the alarm was not cleared by the user that was not in reach of the control panel.

The system 100 also includes a central conference coordinator 140 such as central conference coordinators 140A, 140B, and 140C which can provide a variety of conferencing services that can be executed to simultaneous connect a plurality of users. In a non-limiting example, the central station operator is connected to one or more client stations 150A and authorized users in an audio/video conference using the conferencing services provided by the central conference coordinators 140A, 140B, and 140C.

In some examples, the central conference coordinator 140 can be separate from the security panel. In other examples, the central conference coordinator 140 can be integrated into the security panel within the internal network.

The central station operator can execute the link to initiate the conference call. In other words, the central station 130 activates and distributes the conference join request to the client stations 150A and external users.

A user can pre-configure the users to be simultaneously bridged into the conference responsive to an alarm event. The internal group list and external group list can be used to identify the users and client stations 150A. For example, the internal group lists can include points within the residence being monitored such as client stations, speakers, microphones, sensors, etc. The external call list can include authorized users such as family members, friends, or other users to contact during an alarm event.

In one or more examples, the central station maintains the internal group list and external group list. A user pre-configures the lists and coordinates them with the central station. In other examples, the internal group list and external group list can be stored in the security panel.

The internal network includes more and more wired/wireless devices, sensors 150C, and client stations 150A. Each device in the network can include an identifier to uniquely identify each sensor 150C and client station 150A.

The sensors 150C can include one or more of a glass break sensor, a window contact sensor, a door contact sensor, and a perimeter motion sensor, etc. that can be triggered to activate an alarm condition. Each of the sensors can include an identifier to uniquely identify the triggered sensor. In addition, at the time of installation, the identifiers can be programmed and mapped to the location of sensors and/or client stations of the secured installation area.

Now referring to FIG. 2, an example internal network 200 of devices is shown. The internal network 200 includes a security control panel 202 housing a plurality of components. The internal network 200 also includes client stations 204 and sensors 206. The security control panel 202 includes a microphone/speaker 212, a display 214, and a communication interface 218. The communication interface 218 is configured to communicate with wired/wireless sensors 206 and client stations 204. The communication interface 218 is also configured to communicate with an operator at the central station 130. In addition, the security control panel 202 can also include a graphic user interface (GUI) 220. It should be understood the security control panel 202 can include other modules such as but not limited to a keypad, touchscreen interface, etc.

A plurality of client stations 204 can be located in different locations of the monitored premises 210. For example, a client station 204 may be located on the main level of the home, another client station 204 can be located in the basement, and another client station 204 can be located upstairs. This allows the user to communicate with the central station operator in the event an alarm condition is detected.

A conference is initiated so that each of the client stations 204 is simultaneously connected. Since the location of the user is unknown, the user can direct their communication to the closest client station 204 to confirm the validity of the alarm condition with the operator at the central station 130.

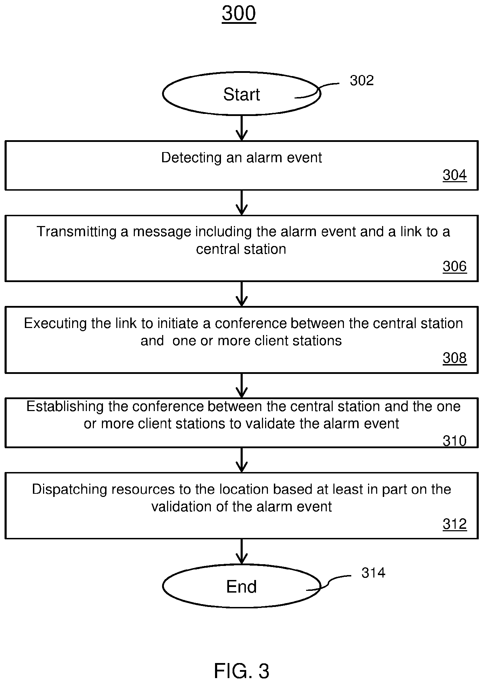

Now referring to FIG. 3, a flowchart of a method 300 for establishing a conference is shown. The method can be implemented in an alarm system such as that shown in FIG. 1. The method 300 begins at block 302 and proceeds to block 304 where the alarm system detects, by one or more sensors and client stations at a location, an alarm event. In one or more examples, the alarm events can include motion detection, sound detection, video detection, etc.

Block 306 transmits a message including the alarm event and a link to a central station. The message can include video data corresponding to the alarm event. The message can include an identifier of the sensor or client device that detected the alarm condition. It should be understood that other data can be transmitted along with the message associated with the alarm event.

Block 308 executing, at the central station, the link to initiate a conference between the central station and one or more user devices. In one or more examples, the central stations take on the role of the host to contact the client stations and the authorized users to establish a conference to determine whether the alarm condition is valid or not.

Block 310 establishes a conference between the central station and the one or more client stations to validate the alarm event. Additional users receiving the distributed message from the central station can join the conference. After joining the conference, one or more of the participants of the conference can confirm or clear the alarm event by communicating with the central station operator.

Block 312 dispatches resources to the location based on the validation of the alarm event. If the alarm is validated by an authorized person in the conference, then resources such as a police officer, firefighter, and/or medical personal can be confidently dispatched to the location. Otherwise, if the alarm event is cleared, the alarm condition is removed and no one is dispatched.

The method 300 ends at block 314. FIG. 3 is not intended to be limiting, and it should be understood that additional steps or even a different sequence of steps can be within the scope of the invention.

The technical effects and benefits provide the capability for audio and video. In addition, the system operates over the TCP/IP layer and all internet connection. This protocol also allows for multipoint-to-multipoint network architecture. The technical effects and benefits allow the central station operator to obtain additional site information allowing for optimization for an alarm decision-making process.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present invention without departing from the scope thereof. Therefore, it is intended that the present invention not be limited to the particular embodiment disclosed as the best mode contemplated for carrying out this present disclosure, but that the present invention will include all embodiments falling within the scope of the claims.

## Claims

1. An alarm system (100) comprising:
one or more sensors (150C, 206) configured to detect an alarm condition;
one or more client stations (150A, 204);
a controller (115) of a security panel (202) operably coupled to the one or more client stations; and
a central station (130) operably coupled to the control panel over a network (120), wherein the central station is configured to initiate a conference between the one or more client stations and the central station.

2. The alarm system of claim 1, wherein the one or more client stations (150A, 204) each include a client station speaker, a client station microphone, and a client station controller (228), wherein the one or more client stations is used to confirm an alarm event.

3. The alarm system of claim 1 or 2, wherein the controller (115) further comprises a display (214), a station speaker (212), a microphone (212), and is configured for communication.

4. The alarm system of claim 1, 2 or 3, further comprising a conference coordinator (140) configured to generate the conference link and provide a conferencing service;
wherein the conference coordinator is optionally integrated into the controller (115).

5. The alarm system of any preceding claim, wherein the network (120) is a TCP/IP network.

6. The alarm system of any preceding claim, wherein the central station (130) is configured to maintain an internal group list and an external group list for the conference;
wherein the central station is optionally configured to execute and host the conference using the internal group list and the external group list.

7. A method comprising:
detecting, by one or more sensors (150C, 206) and client stations (150A, 204) at a location, an alarm event;
transmitting, from a security alarm controller (115), a message including the alarm event and a link to a central station (130);
executing, at the central station, the link to initiate a conference between the central station and one or more client stations;
establishing the conference between the central station and the one or more client stations to validate the alarm event; and
dispatching resources to the location based at least in part on the validation of the alarm event.

8. The method of claim 7, further comprising responsive to the detection, generating, at a central conference coordinator (140), the link for the conference to validate the alarm event.

9. The method of claim 7 or 8, further comprising the security alarm controller (115) communicating with the central conference coordinator to generate the link for the conference.

10. The method of claim 7, 8 or 9, wherein the message includes an identifier of the one or more sensors (150C, 206) detecting the alarm event, and/or wherein the message comprises video data of the one or more sensors that detected the alarm event.

11. The method of any of claims 7 to 10, further comprising maintaining an internal group list of one or more sensors (150C, 206) positioned at the location and an external group list of one or more authorized users to contact using the conference during an alarm event;
wherein the central station operator optionally communicates with the security alarm controller (115), the one or more client stations (150A, 204), and the one or more authorized users simultaneously.

12. The method of any of claims 7 to 11, wherein the central station (130) is the host to establish the conference.

13. The method of any of claims 7 to 12, further comprising communicating with a user through the one or more client stations (150A, 204) in the conference to validate the alarm event;
the method optionally further comprising, responsive to validating the alarm event, dispatching resources to the location indicating the alarm event.

14. The method of any of claims 7 to 13, further comprising wirelessly communicating with the one or more sensors (150C, 206) and the one or more client stations (150A, 204).

15. The method of any of claims 7 to 14, further comprising wherein the security alarm controller (115), the one or more sensors (150C, 206), and the one or more client stations (150A, 204) communicate over an internal network (120).
